# EUROPEAN PATENT SPECIFICATION

(11) **EP 0 490 625 B1**
(45) Date of publication and mention of the grant of the patent: **17.05.2000**
(21) Application number: 91311453.4
(22) Date of filing: 10.12.1991
(51) Int. Cl.: G06F 17/30

(54) **Graphic definition of range in the selection of data from a database field**
Graphische Definition eines Bereiches bei der Auswahl von Daten eines Datenbankfeldes
Définition graphique d'une plage pour la sélection de données d'un champ de base de données

(30) Priority: 10.12.1990 US 624826
(43) Date of publication of application: 17.06.1992
(73) Proprietor: International Business Machines Corporation, Armonk, N.Y. 10504 (US)
(72) Inventor: Li, Shih-Gong, Austin, Texas 78750 (US); Tate, Bruce Allan, Austin, Texas 78759 (US)
(74) Representative: Tomlinson, Kerry John

(56) References cited:
- US-A- 4 831 556
- 1989 IEEE WORKSHOP ON VISUAL LANGUAGES 4 October 1989, ROME, IT pages 130 - 137 TSUDA K. ET AL : 'IconicBrowser: An Iconic Retrieval System for Object-Oriented Databases'
- IBM TECHNICAL DISCLOSURE BULLETIN. vol. 33, no. 3B, August 1990, NEW YORK US pages 31 - 32 'Min-Max Slider'

## Description

The present invention relates in general to an interface between a human user and a computerized database system. More particularly, the invention is directed to a system and method for graphically specifying data ranges used in defining a query to a database.

The entry and retrieval of data via interactive terminals is now a common practice. Large volumes of data stored on magnetic disks, optical disks, or other contemporary non-volatile storage media, are routinely accessed locally or through networks using terminals or functional equivalent workstations or personal computers. Such prevalent uses of databases has created an environment in which the level of data processing skill processed by an average user is disproportionately low in relation to the complexity of the hardware and software functions available to interact with the database. This is particularly true for relational databases, where the information content is significant yet the query mechanisms for defining the desired information involve esoteric data definitions and groupings. Though the human interface technology for accessing relational database information has progressed beyond the use of structured query language (SQL) statements to the use of query by example (QBE) techniques, there remains a need for further simplification of the interaction.

The use of bars with slide blocks or related markers to select values for parameters such as color, shading or quantity in software programs is common practice. For example, this technique is used in the OS/2 (trademark of IBM Corporation) Extended Edition operating system program, available from IBM Corporation, to define screen colors for a workstation. As such, the approach represents nothing more than a graphically simulated analog value selector. U.S. Patent No. 4,905,163 teaches in one aspect the relating of bar graph depicted input and output data through specified mathematical formulas. The underlying concept relates to having information provided both in numerical and graphical form.

A representative commercially available relational database is included in the aforementioned OS/2 Extended Edition operating system program available from IBM Corporation, as particularly suited for use in a PS/2 (trademark of IBM Corporation) workstation. A representative configuration for such workstation includes a graphics display, a keyboard, a mouse and cabinet resident hard disk drive. A typical workstation would also include communication and networking cards suitable to access extended databases in networks or on host computers.

1989 IEEE Workshop on Visual Languages 4, October 1989, Rome, IT, pages 130-137 describes an iconic retrieval system for object-oriented databases. The preambles to the independent claims are based on this document.

According to a first aspect of the present invention, there is provided a system for interfacing between a user and data stored in a database, comprising: means for depicting on a graphical display hierarchically ordered data from the database; means for specifying a range from within the data; and means for depicting on the graphical display the specified range referenced to the means for depicting the data; characterised in that: said means for depicting on a graphical display hierarchically ordered data from the database comprises means for graphically depicting linearly on the graphical display a field of data from the database; said means for specifying a range from within the data comprises means for specifying a range from within the field of data; and said means for depicting on the graphical display the specified range referenced to the means for depicting the data comprises means for graphically depicting on the graphical display the specified range referenced to the means for graphically depicting the field of data.

According to a second aspect of the present invention, there is provided a method of interfacing a human user to data in a database, comprising the steps of: depicting on a workstation display hierarchically ordered data present in the database; specifying by boundary markers a range within the data; and relating the boundary markers to the data; characterised in that: said step of depicting on a workstation display hierarchically ordered data present in the database comprises graphically depicting on a workstation display a linear field of data present in the database; said step of specifying by boundary markers a range within the data comprises specifying by graphically defined boundary markers a range within the linear field of data; and said step of relating the boundary markers to the data comprises relating the graphically defined boundary markers to data within the linear field of data.

According to a third aspect of the present invention, there is provided a method of generating data defining a range condition for use in accessing a database, comprising accessing the database to extract a field of hierarchically ordered data from within a field of the database, displaying said data, generating and displaying marker images to represent a range within said data, and automatically generating data defining a range condition for accessing the database based on the represented range and the extracted data; characterised by generating and displaying a linear graphical image of said field of data, generating and displaying marker images positioned in relation to said linear image to graphically represent a range within the linear image, and automatically generating data defining a range condition for accessing the database based on the graphically represented range and the extracted data.

The present invention provides an intuitive yet comprehensive system and method for a human user to define the range of a query directed to a relational database. More particularly, the invention involves the use of graphic representations, preferably combined with alphanumerics as required, to establish the range of an SQL "BETWEEN" clause in a query directed to a relational database.

According to a preferred practice of the invention, the BETWEEN clause in a query is graphically defined through the use of a dialog window. The window includes a ruler to represent the whole of the data range subject to selection. Multiple graphically depicted tacks are positioned along the ruler as relative bounds for the values to be selected from the field of data. The data values selected conceptually lie between the boundaries defined by the tacks. Thus, the graphical representation of a ruler with a segment defined by tacks is used to represent a BETWEEN clause applicable to a field of data. Such data is preferably a row from within the relational database.

A preferred arrangement of the ruler includes graphically depicted incrementing and decrementing mechanisms at opposite ends of the ruler or bar structure, designed to selectively translate the respectively related tacks along the ruler. Another beneficial feature is the presence of a pair of dialog boxes, which boxes relate to the tack positions and as such provide in alphanumeric format the actual data corresponding to the locations of the tacks.

Permutated uses of the tacks in relation to the ruler provide the human user with graphical mechanisms to define relationships such as equality, greater than, less than, and even exclusions of range. Furthermore, the invention is suitable to define either inclusion or exclusion of the end points established by the tacks.

These and other features of the invention will be understood and appreciated with greater specificity upon considering the detailed description of a preferred embodiment of the invention which follows by way of example only and with reference to the accompanying drawings.

### Brief Description of the Drawings

Fig. 1 is a schematic block diagram of a workstation using a graphics media to select a range of query data.
Figs. 2, 3 and 4 are schematics of example windows and related data fields.
Figs. 5A, 5B, and 6A-6E are schematic flow diagrams of steps relating to the practice of the invention.

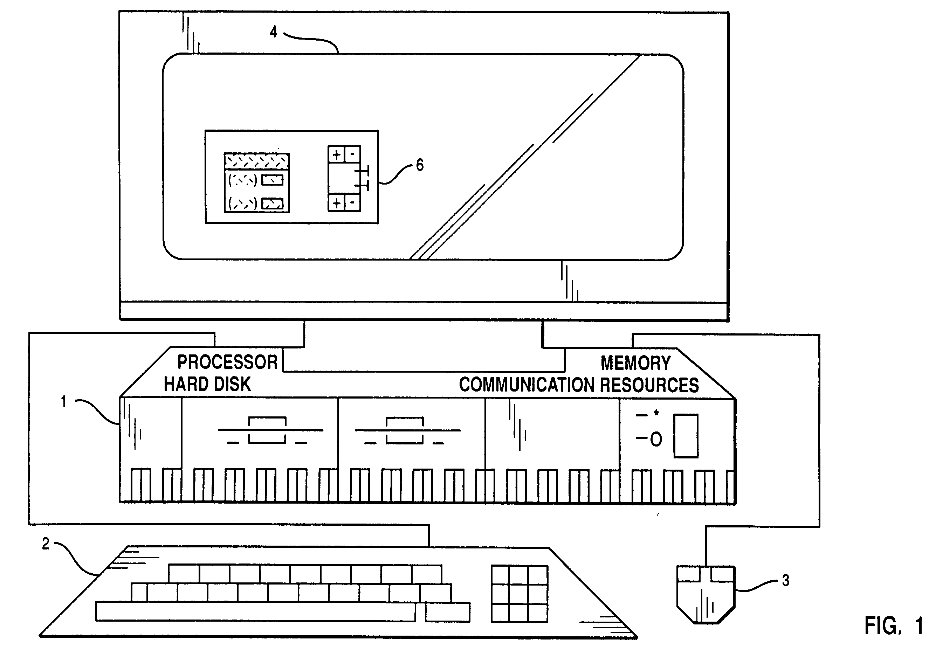

The present invention is preferably practiced in the context of the system generally depicted in Fig. 1. As such, the preferred system includes a workstation 1 (processor, memory, hard disk, communication resources) having attached thereto a keyboard 2 and mouse 3. A graphics video display 4 is also shown. Preferably, the hardware is the aforementioned PS/2 workstation and is responsive to the noted OS/2 Extended Edition operating system program.

The invention focuses on a system, program and method by which a user friendly and intuitive interface can be manipulated to define a query for a relational database, such as the database in the OS/2 operating system, by a human user of moderate data processing skill. In the example set forth hereinafter, the objective is to selectively extract data which satisfies specified conditions. The invention teaches a way to specify a BETWEEN relationship in fields of relational data while providing the user with intuitive feedback as to how the specified range relates to the overall range of the field. Window 6 in display 4 illustrates a representative working environment for the user.

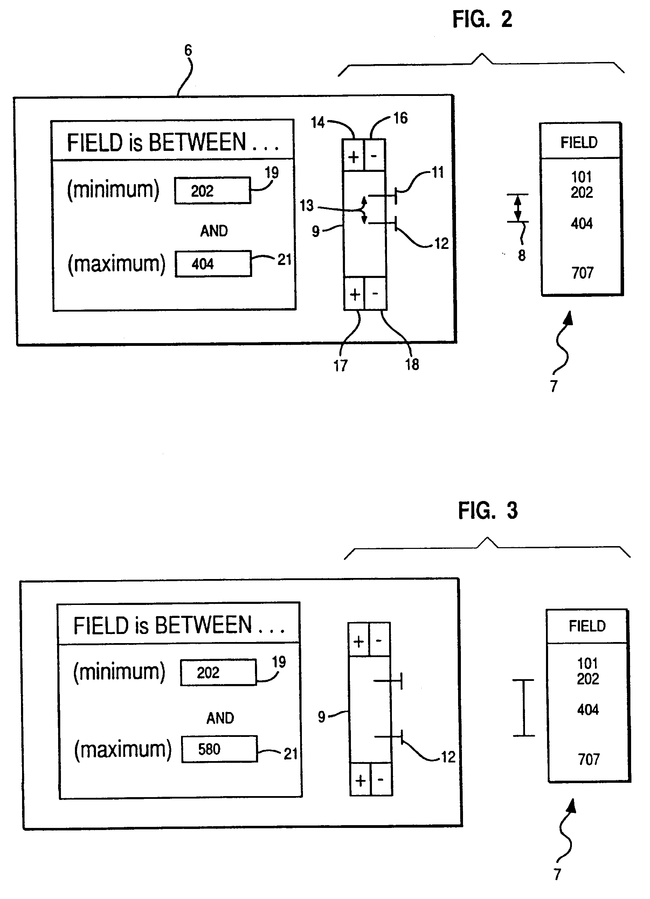

Window 6 is shown in magnified form in Fig. 2. A field of information 7 as might reside in the relational database is shown juxtaposed, including conceptually related range boundary markers 8. The data in field 7 is indexed to ensure ascending, or descending if desired, hierarchy thereof.

According to the preferred practice of the invention as first depicted in Fig. 2, window 6 includes a rectangular shaped bar or ruler 9 to generally represent the linear distribution of the data 7. Referenced to the ruler 9 are a pair of boundary marking tacks 11 and 12, respectively designating according to the preferred practice a minimum and maximum range therebetween, generally 13, within the expanse of ruler 9. Since the length of ruler 9 is a linear representation of the data in field 7, range 13 is a linear subdivision of the values within the range.

If desired, the linearity between range 13, and the corresponding range 8 of values within the field of data 7, can be eliminated and replaced by a measure based upon the position of the data element within the count of data elements in field 7. In such embodiment the data number 404 would correspond to the ruler region lying between 50% and 75% of its expanse.

The embodiment depicted in Fig. 2 also includes at each end of ruler 9 a set of blocks 14, 16, 17 and 18, individually identified by "+" and "-" symbols. The blocks are used to increment or decrement their associated tacks in varying the range 13. Preferably, the changes would occur in step increments of existing data. Thus, the selection of "+" block 14 would incrementally move minimum value tack 11 from its present value, such as 202, to the next greater value, 404. Selection of block 16, on the other hand, would move tack 11 in the opposite direction. Similarly, maximum value tack 12 is responsive to increasing or decreasing changes of range initiated by respective selections of blocks 17 or 18.

The preferred arrangement of the invention also provides for the direct "dragging" of tacks 11 and 12 up or down the length of the ruler by selection using mouse 3 (Fig. 1).

The use of rulers and tacks to select ranges within a field of a relational database is particularly useful in specifying a search having the functional equivalent of SQL BETWEEN clauses in selecting data from a designated field. The graphic representation provides a user friendly and intuitive implementation by which to select the argument range.

The embodiment depicted in Fig. 2 also provides a pair of dialog boxes, 19 and 21, which respectively show the range minimum and maximum data as resides in the grouping of field 7. A preferred arrangement of the invention allows the user to select a range by entering alphanumeric data into such dialog windows 19 and 21 and thereupon graphically ascertain from the locations of tacks 11 and 12 the relative expanse of the field encompassed by the alphanumeric data so entered. In this way the user is given maximum flexibility, in that the range information can be entered into the dialog box and visually appreciated from the ruler tacks, or controlled by movement of the ruler tacks and alphanumerically quantified by values showing in the dialog windows.

Fig. 3 illustrates that the data, in this case numerical values, represented by the tacks, and particularly tack 12, does not necessarily have to match a value in field 7. In this case, maximum tack 12 has been located at the relative value of 580 in a ruler range extending between 101 and 707. Thus the user of the graphical interface can define the BETWEEN argument without knowing the actual values of the data in the field, merely by dragging the tacks to relative percentage locations along the ruler. A preferred arrangement allows the tacks to "snap" to the nearest value upon release from a dragging operation, a technique particularly useful with alphabetic entry fields. The range boundaries defined by such location of the tacks appear in dialog blocks 19 and 21. It is also possible, as described earlier, to enter alphanumeric values into dialog blocks 19 and 21, and then observe the effects upon the minimum and maximum tack positions.

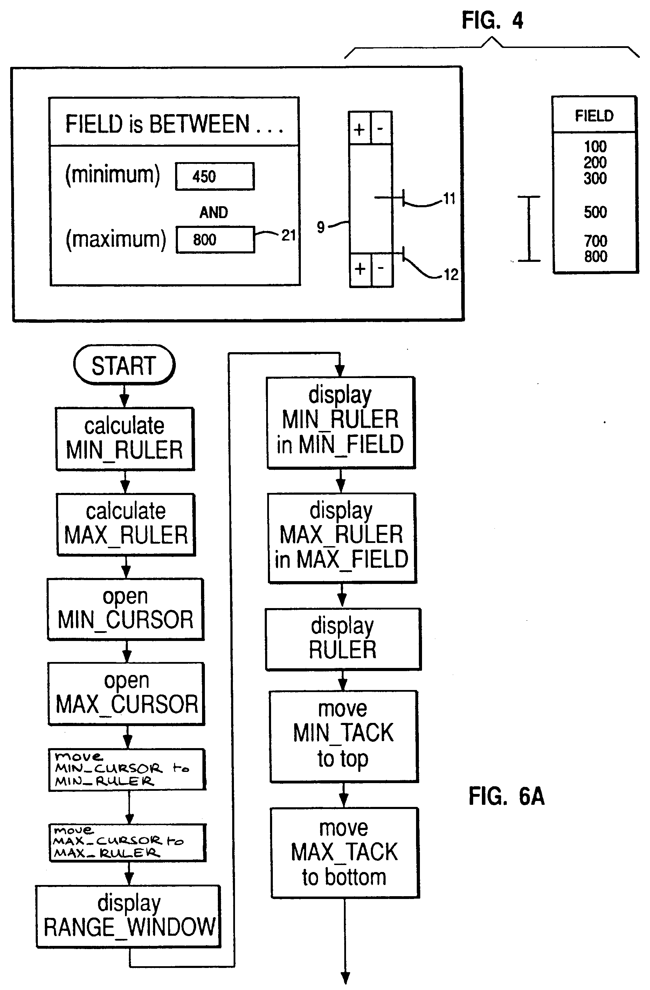

Fig. 4 illustrates another use of rulers and tacks according to the present invention. In this case, maximum tack 12 is situated at the end of the ruler, and the maximum value so designated appears in dialog block 21. If minimum tack 11 is placed at the middle of ruler 9, not only does the value appear in dialog block 19, but the BETWEEN argument prescribes a selection of the upper half of the data in the field without any prior knowledge of the data values.

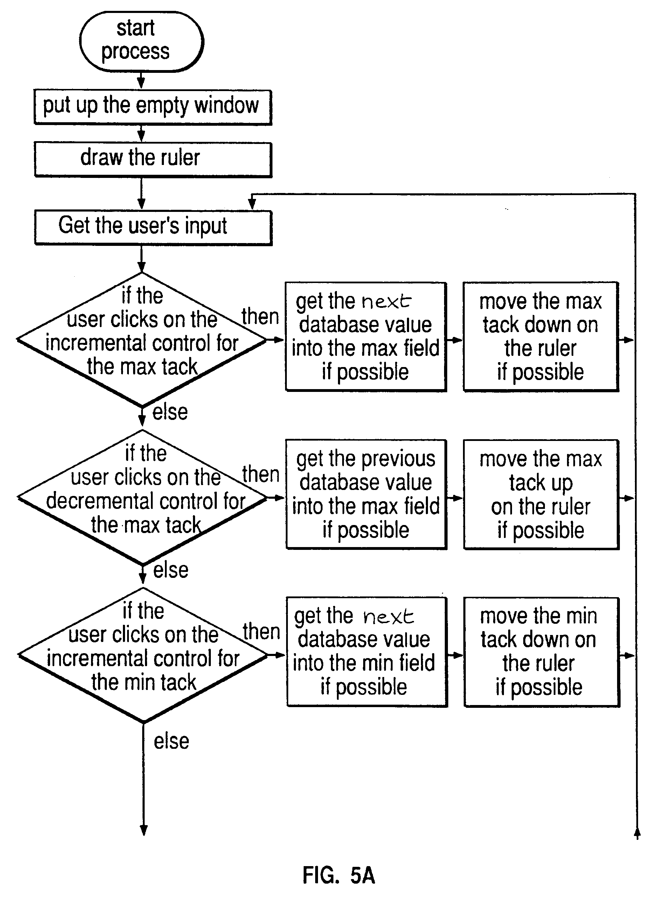

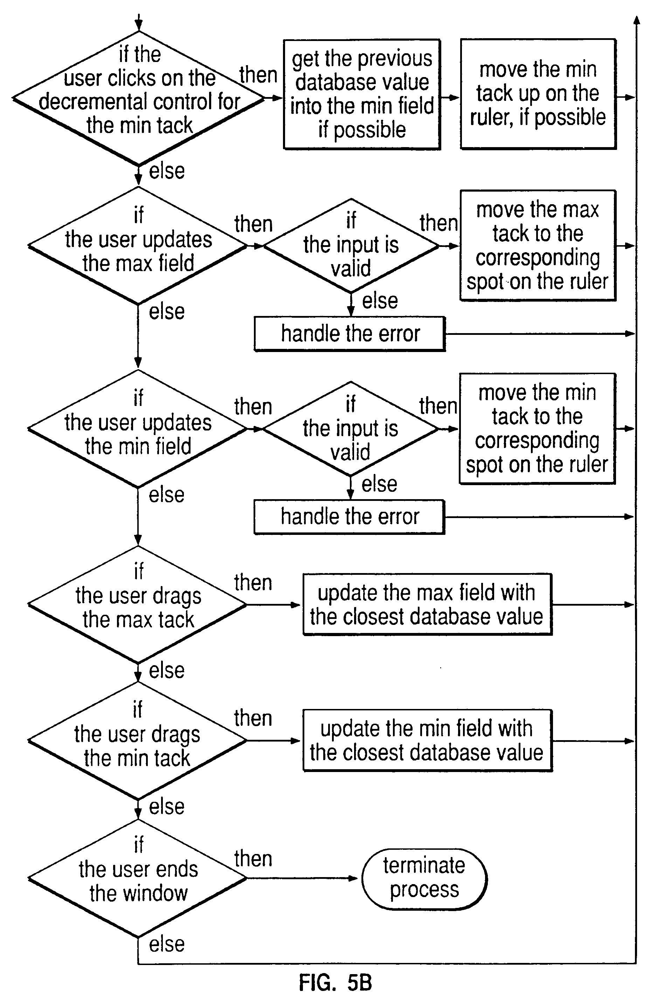

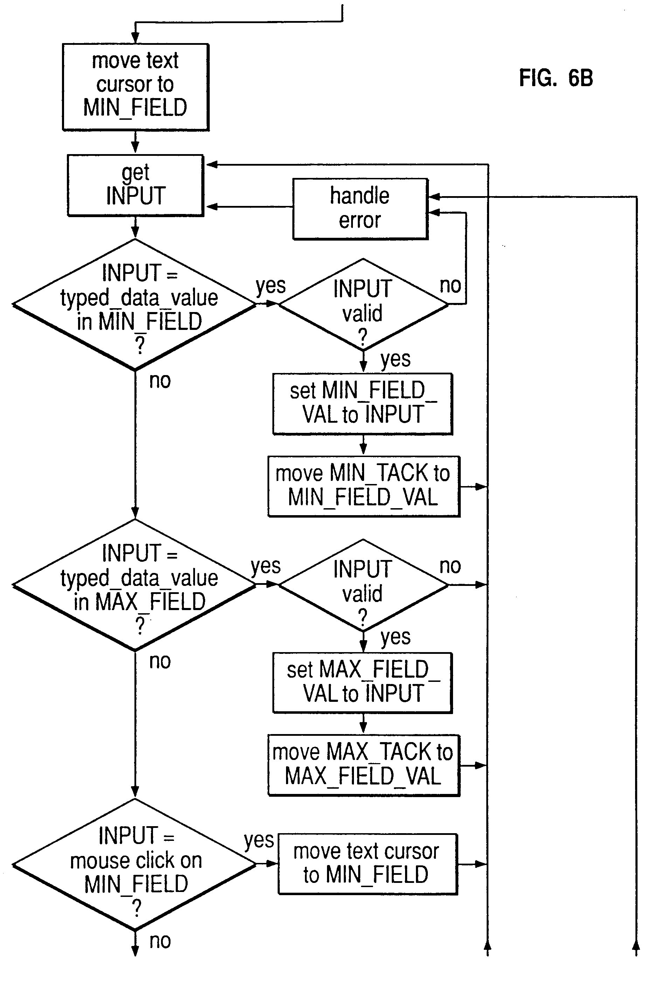

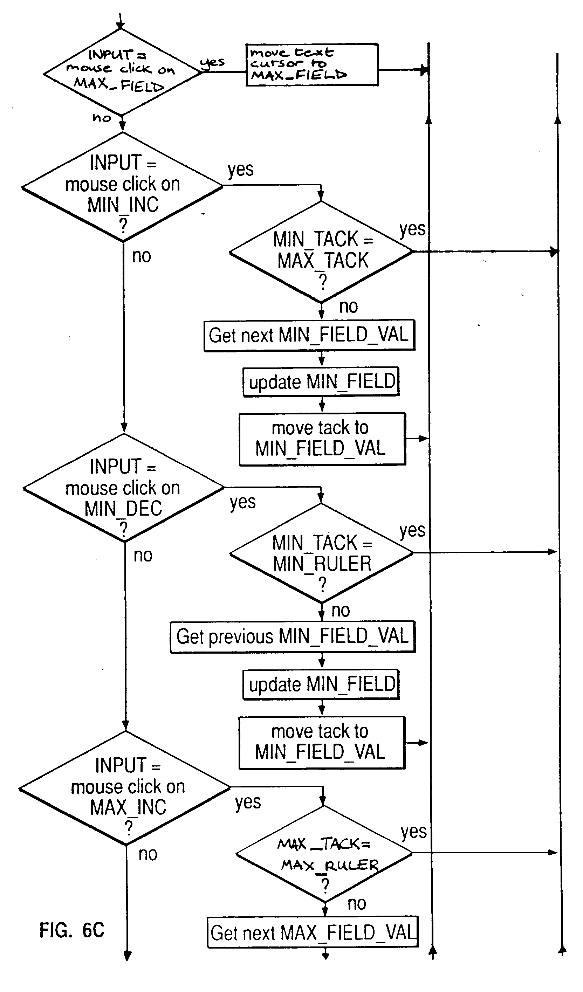

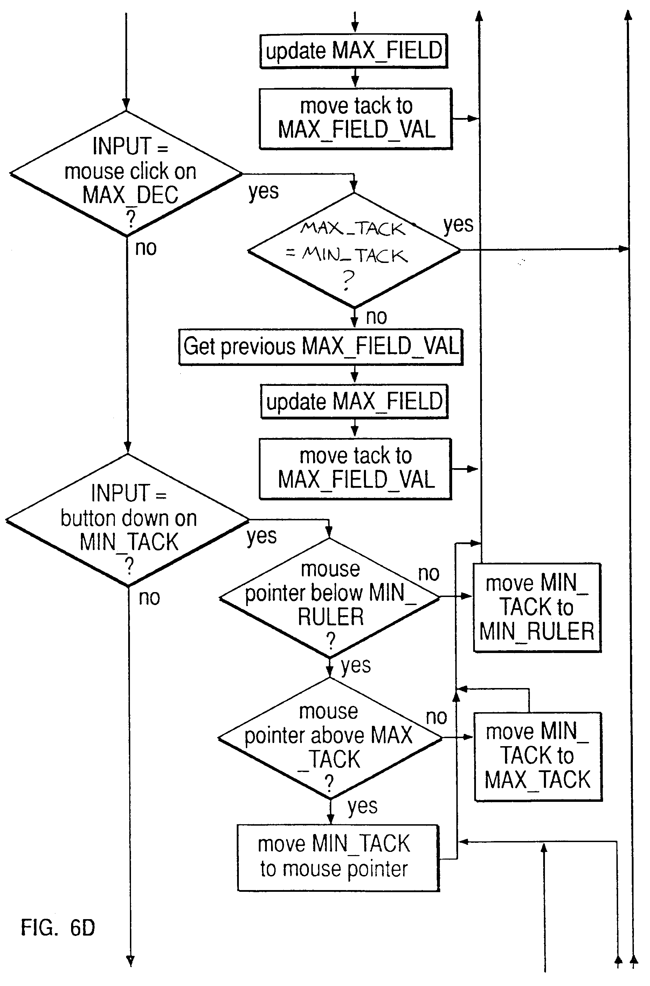

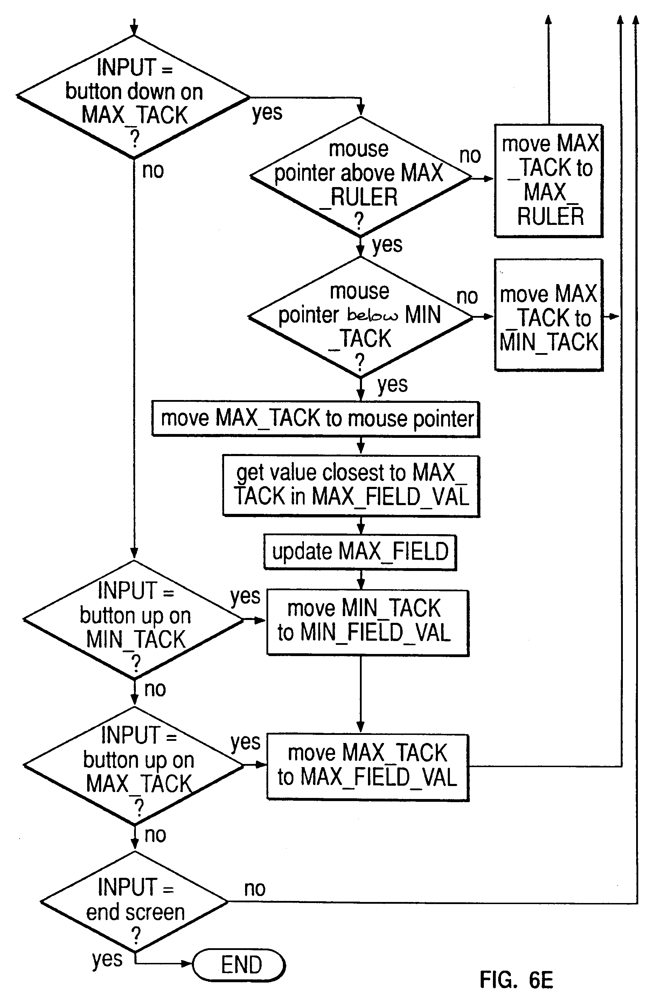

Figs. 5A and 5B depict by flow diagram a behavioral level process for using the invention to define a BETWEEN argument for a relational database search. The succession of Figs. 6A-6E particularize the procedures as relates to the use of a cursor and mouse to interact with the ruler, the tacks, and dialog boxes in the course of a user establishing or modifying a BETWEEN argument for a relational database search.

Pseudo code, from which source code can be derived, for controlling the interaction between the user and the ruler, tacks and dialog blocks in the window is set forth below. The code follows the operations depicted by flow diagrams in Figs. 6A-6E.

The '〈attribute〉 CLOSEST TO 〈value〉' operator returns the database row whose specified 〈attribute〉 value is closest to the specified 〈value〉. The '〈attribute〉' parameter may be omitted in cases where the desired value is clear.

The 'MOVE CURSOR TO 〈attribute〉 VALUE 〈value〉'. operator is used to move an open cursor to a database row whose 〈attribute〉 value is equal to the specified 〈value〉.

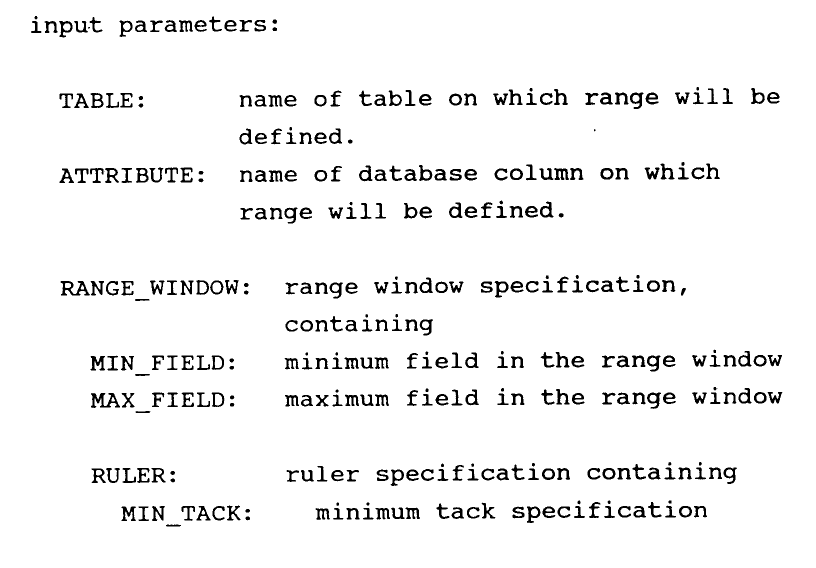

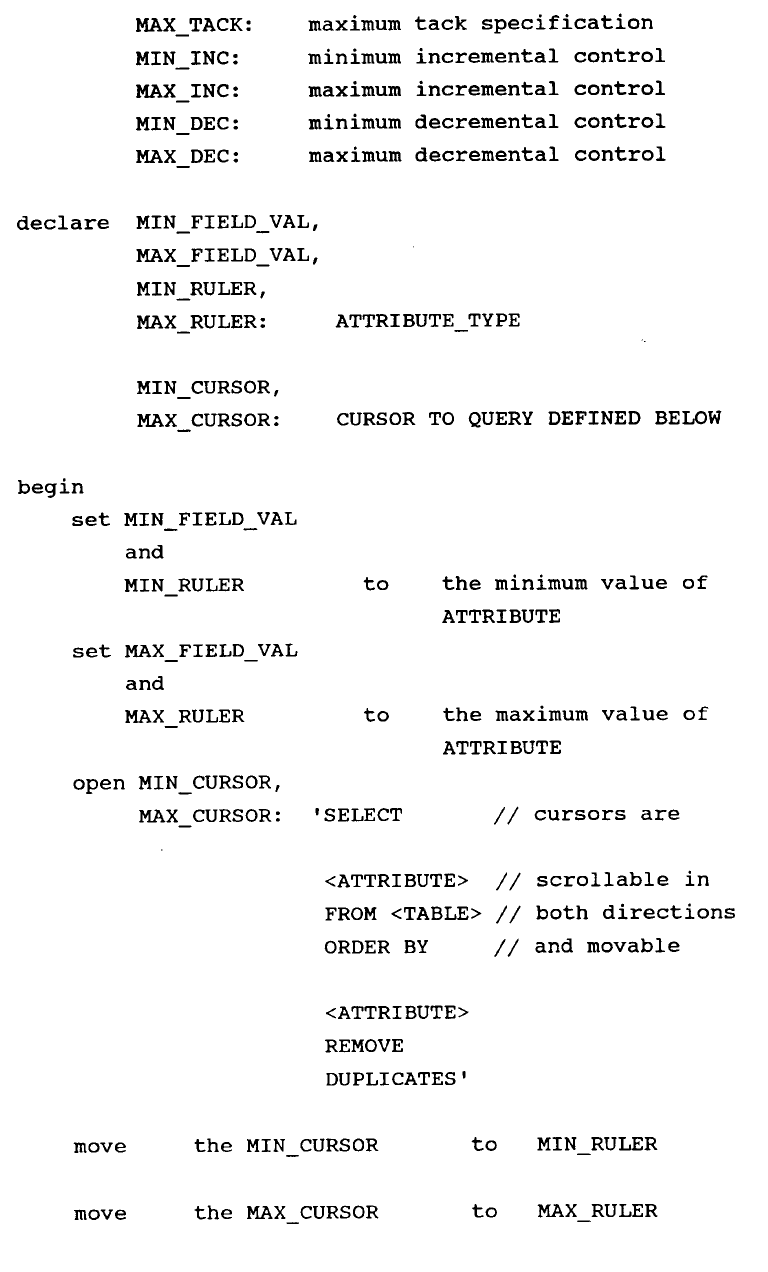

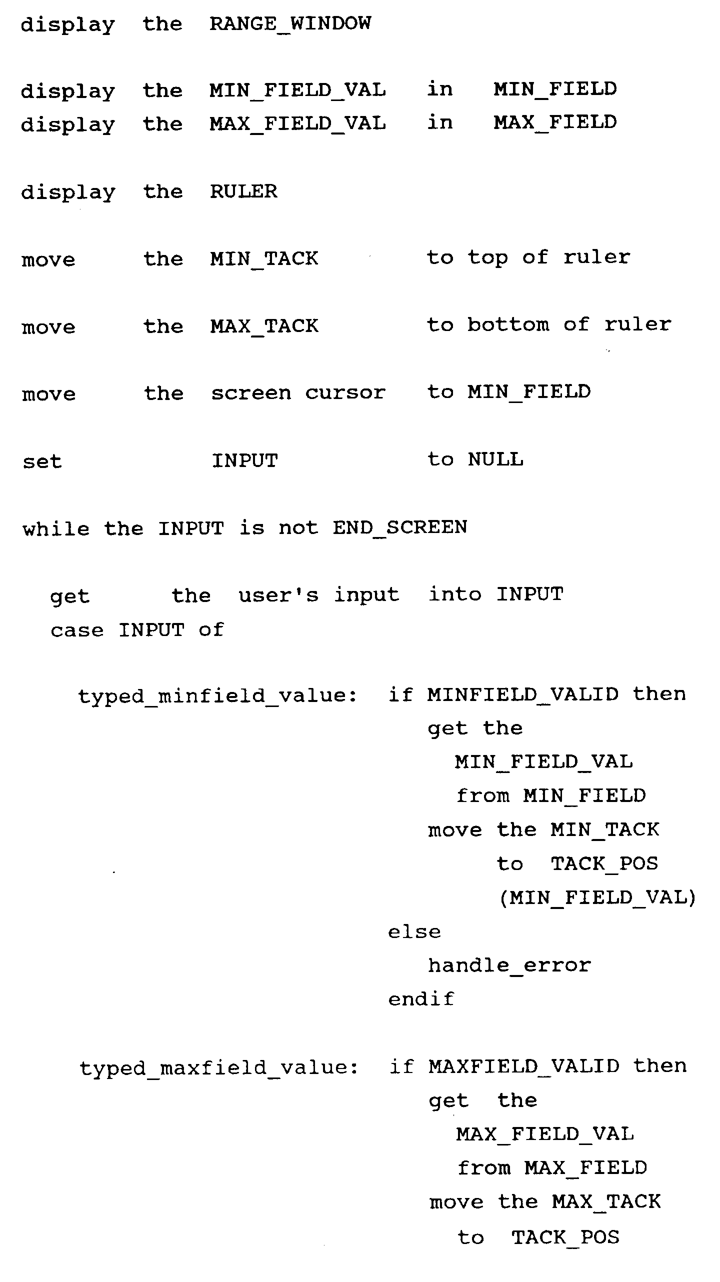

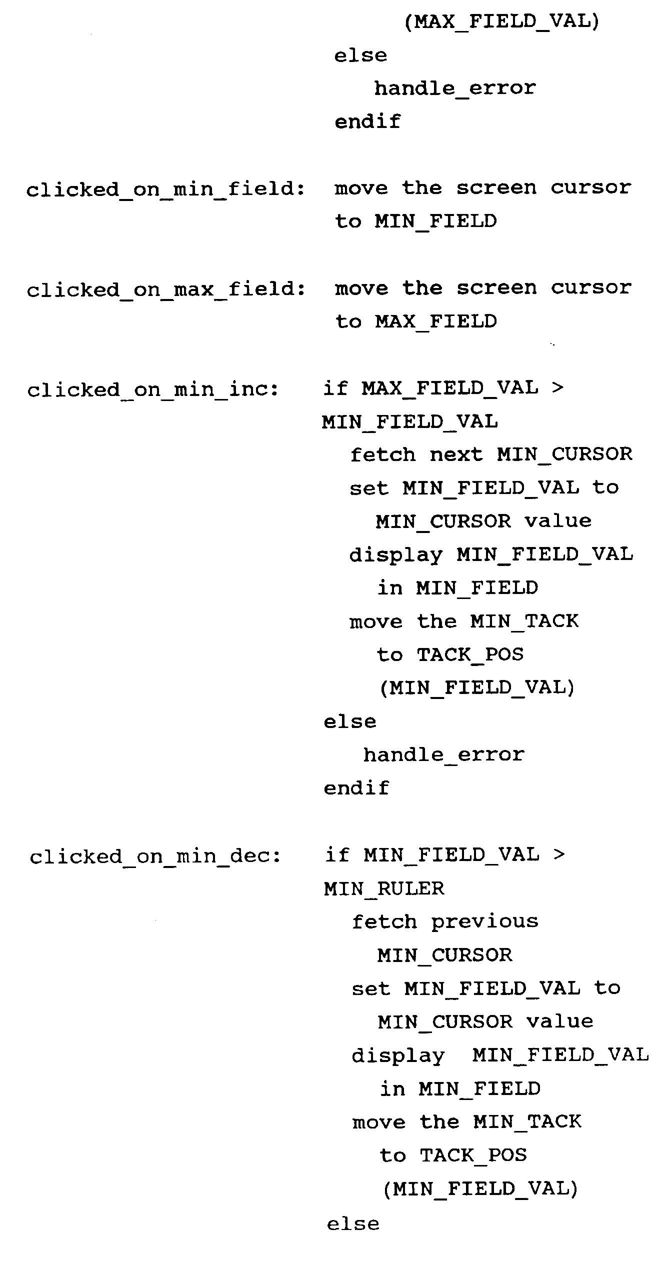

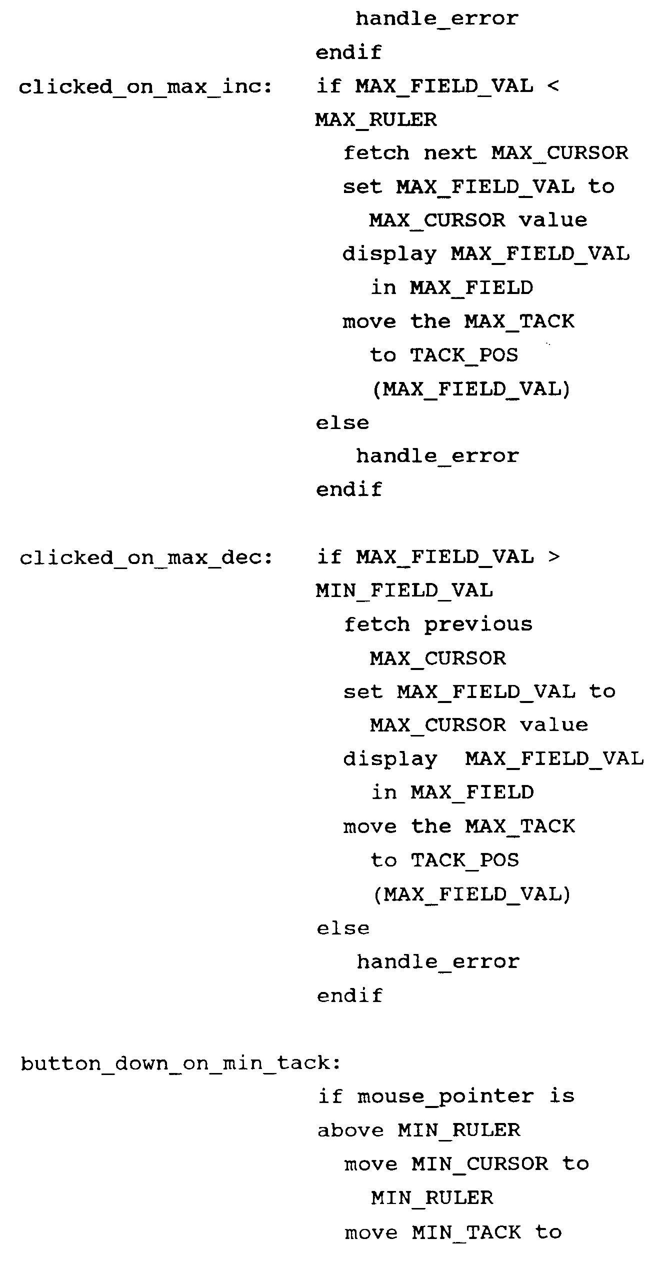

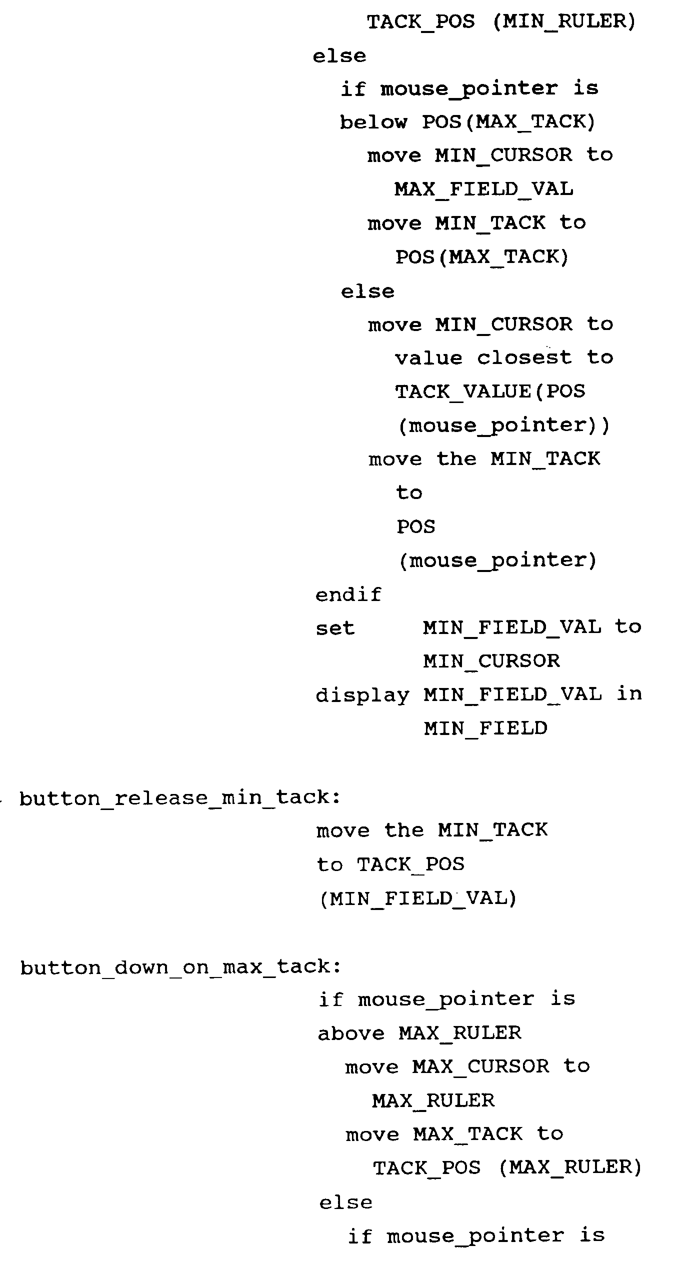

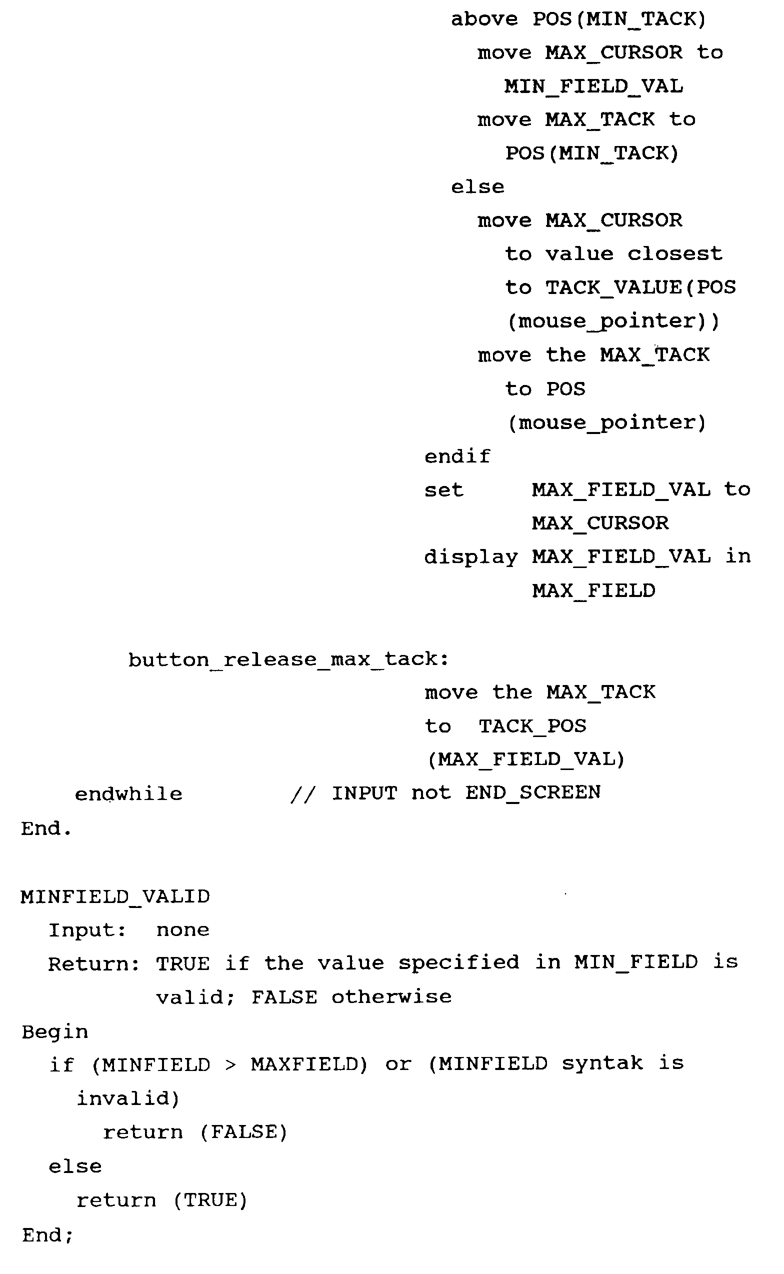

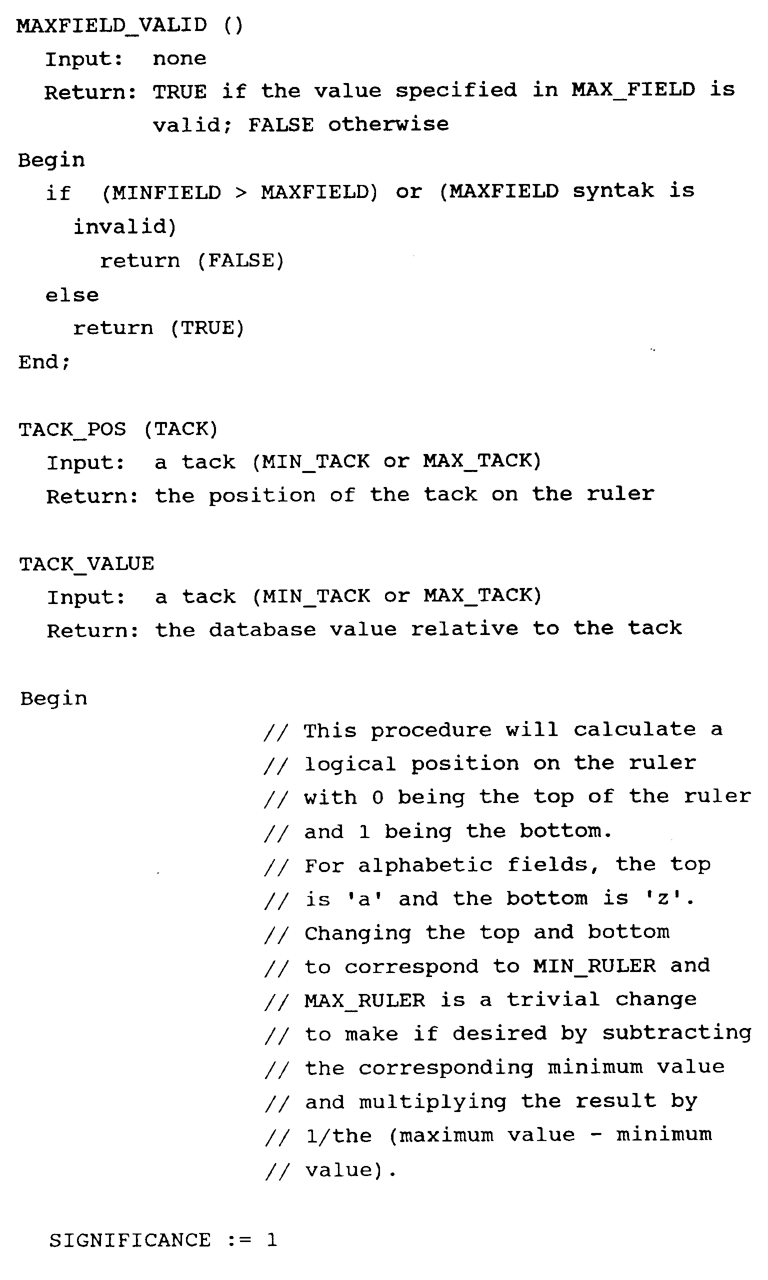

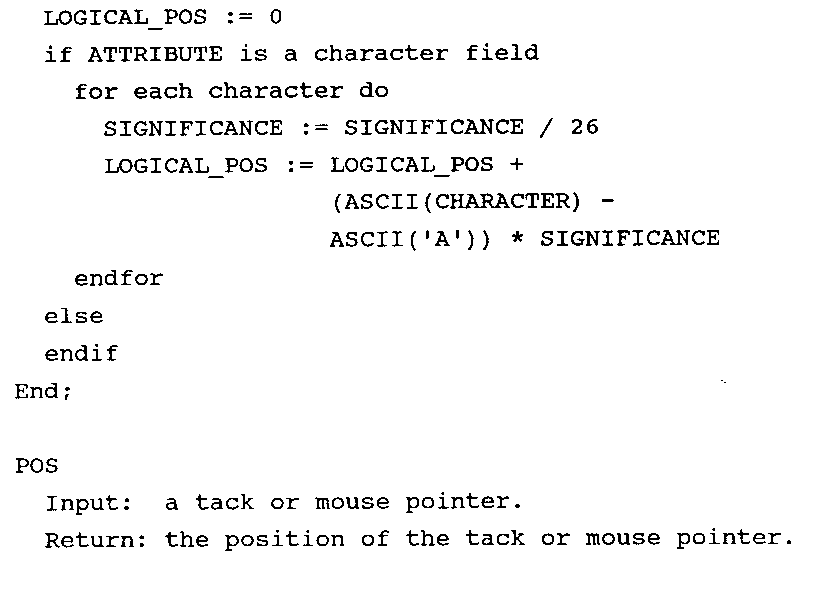

The various features of the invention clearly provide a user friendly interface for defining a BETWEEN argument in structuring a query directed to a database. The system and method are particularly useful in that database information is selectively provided to the user in the course of defining a range, they allow the user to enter data values and see the effects upon the range as relates to the data field, and provide the user with resources for incrementally moving through the field by data value increments. Thus, the field of the data for selecting a range is not presented in an overwhelming volume, yet is generically perceivable by the user in the course of specifying a range.

The invention incorporates features which make it particularly amenable to variations which allow more esoteric designation of data ranges within fields. Though the data fields are hierarchically ordered as indexed, they are not restricted to numerical values and, as such, can include alphabetically related data or alphanumeric combinational data. The invention also contemplates the possible use of overlapping tacks to designate equality, which equality can be specified by location on the ruler and subject to particularization in value using entry of data into the dialog blocks. The locations of tacks 11 and 12 in Fig. 4 also illustrate how the invention can be used to designate a less than status, in this case limited to a 50% range. The same approach can be used to designate a greater than status. It is further possible to individually characterize the tack icons to define an inclusion or an exclusion of the end points designated by the tacks. Additionally, the invention contemplates the use of distinctive tacks to define an excluded range, such as might be represented by a query argument NOT BETWEEN.

Thus, the present invention provides an interface which allows a user to manipulate multiple tacks over a linearly displayed ruler, representing a field of data in a database, and provides interactive dialog blocks related to such tacks and field data, to allow a user intuitive interaction in specifying a BETWEEN clause query for a relational database.

Though the invention has been described and illustrated by way of specific embodiments, the systems and methods should be understood to encompass the full scope of any structures and practices defined by the claims set forth hereinafter.

## Claims

1. A system for interfacing between a user and data stored in a database, comprising:
means for depicting on a graphical display hierarchically ordered data from the database;
means for specifying a range from within the data; and
means for depicting on the graphical display the specified range referenced to the means for depicting the data;
characterised in that:
said means for depicting on a graphical display hierarchically ordered data from the database comprises means (9) for graphically depicting linearly on the graphical display (4) a field of data (7) from the database;
said means for specifying a range from within the data comprises means for specifying a range from within the field of data; and
said means for depicting on the graphical display the specified range referenced to the means for depicting the data comprises means (11, 12) for graphically depicting on the graphical display the specified range referenced to the means for graphically depicting the field of data.

2. The system recited in claim 1, further comprising a graphical means (14, 16, 17, 18) for selectively varying the specified range.

3. The system recited in claim 2, wherein the means for selectively varying the specified range comprises means for incrementing and for decrementing.

4. The system recited in claim 1, 2 or 3, wherein the means for specifying includes alphanumeric entry means (19, 21) for specifying the range.

5. The system recited in any preceding claim, wherein the field of data is a field from a relational database.

6. The system recited in any preceding claim, wherein the means for graphically depicting a field of data is a ruler bar (9), and the means for graphically depicting the specified range includes boundary markers (11, 12) referenced to the ruler bar.

7. The system recited in claim 6, wherein the means for specifying the range selects a closest value when varied in response to a translation of a boundary marker.

8. A method of interfacing a human user to data in a database, comprising the steps of:
depicting on a workstation display hierarchically ordered data present in the database;
specifying by boundary markers a range within the data; and
relating the boundary markers to the data; characterised in that:
said step of depicting on a workstation display hierarchically ordered data present in the database comprises graphically depicting on a workstation display (4) a linear field of data (7) present in the database;
said step of specifying by boundary markers a range within the data comprises specifying by graphically defined boundary markers (11, 12) a range within the linear field of data; and
said step of relating the boundary markers to the data comprises relating the graphically defined boundary markers to data within the linear field of data.

9. The method recited in claim 8, further comprising:
modifying the range by repositioning the boundary markers.

10. The method recited in claim 8 or 9, wherein the step of specifying creates a proportional relationship between the locations of the graphically depicted boundary markers and the field of data.

11. The method recited in claim 8, 9 or 10, wherein the database is relational.

12. A method of generating data defining a range condition for use in accessing a database, comprising accessing the database to extract a field of hierarchically ordered data from within a field of the database (7), displaying said data, generating and displaying marker images to represent a range within said data, and automatically generating data defining a range condition for accessing the database based on the represented range and the extracted data; characterised by generating and displaying a linear graphical image (9) of said field of data, generating and displaying marker images (11, 12) positioned in relation to said linear image to graphically represent a range within the linear image, and automatically generating data defining a range condition for accessing the database based on the graphically represented range and the extracted data.

13. A method as claimed in claim 12 further comprising determining explicit values using the graphically represented range and the extracted data, and displaying the explicit values (19, 21) corresponding to the graphically represented range.

## Patentansprüche

1. System, um über eine Schnittstelle eine Verbindung zwischen einem Benutzer und Daten, die in einer Datenbank gespeichert werden, herzustellen, das Folgendes umfasst:
Mittel, um hierarchisch geordnete Daten aus der Datenbank auf einem Grafikbildschirm darzustellen;
Mittel, um einen Bereich innerhalb der Daten festzulegen; und
Mittel, um auf dem Grafikbildschirm den festgelegten Bereich darzustellen, der dem Mittel zur Darstellung der Daten bezeichnet wird;
dadurch gekennzeichnet, dass:
das Mittel, das zur Darstellung von hierarchisch geordneten Daten aus der Datenbank auf einem Grafikbildschirm dient, Mittel (9) umfasst, um ein Datenfeld (7) aus der Datenbank linear auf dem Grafikbildschirm (4) grafisch darzustellen;
wobei das Mittel zur Festlegung eines Bereichs innerhalb der Daten Mittel umfasst, um einen Bereich innerhalb des Datenfeldes festzulegen; und
wobei das Mittel zur Grafikbildschirm-Darstellung des festgelegten Bereichs, der dem Mittel zur Darstellung der Daten bezeichnet wird, Mittel (11, 12) umfasst, die dazu dienen, den festgelegten Bereich, der dem Mittel zur grafischen Darstellung des Datenfeldes bezeichnet wird, auf dem Grafikbildschirm grafisch darzustellen.

2. System nach Anspruch 1, das des Weiteren ein Grafikmittel (14, 16, 17, 18) umfasst, um den festgelegten Bereich selektiv zu ändern.

3. System nach Anspruch 2, wobei das Mittel, das dazu dient, den festgelegten Bereich selektiv zu ändern, Mittel zur Erhöhung und zur Verringerung umfasst.

4. System nach Anspruch 1, 2 oder 3, wobei das Mittel zur Festlegung Mittel (19, 21) zur alphanumerischen Eingabe enthält, um den Bereich festzulegen.

5. System nach einem beliebigen der vorhergehenden Ansprüche, wobei das Datenfeld ein Feld aus einer relationalen Datenbank ist.

6. System nach einem beliebigen der vorhergehenden Ansprüche, wobei das Mittel zur grafischen Darstellung eines Datenfeldes eine Linealleiste (9) ist und das Mittel zur grafischen Darstellung des festgelegten Bereichs Begrenzungsmarkierungen (11, 12) in Bezug auf die Linealleiste enthält.

7. System nach Anspruch 6, wobei das Mittel zur Festlegung des Bereichs den nächstliegenden Wert auswählt, wenn er als Antwort auf eine Umsetzung einer Begrenzungsmarkierung verändert wird.

8. Verfahren, um über eine Schnittstelle eine Verbindung zwischen einem Benutzer und Daten in einer Datenbank herzustellen, das die folgenden Schritte umfasst:
Darstellen von hierarchisch geordneten Daten, die in der Datenbank vorhanden sind, auf dem Bildschirm eines Arbeitsplatzrechners;
mit Hilfe von Begrenzungsmarkierungen Festlegen eines Bereichs innerhalb der Daten; und
Verknüpfen der Begrenzungsmarkierungen mit den Daten;
dadurch gekennzeichnet, dass
der Schritt der Darstellung von hierarchisch geordneten Daten, die in der Datenbank vorhanden sind, auf dem Bildschirm eines Arbeitsplatzrechners die grafische Darstellung eines linearen Datenfeldes (7), das in der Datenbank vorhanden ist, auf dem Bildschirm eines Arbeitsplatzrechners (4) umfasst;
wobei der Schritt der Festlegung eines Bereichs innerhalb der Daten mit Hilfe von Begrenzungsmarkierungen die Festlegung eines Bereichs innerhalb des linearen Datenfeldes durch grafisch angegebene Begrenzungsmarkierungen (11, 12) umfasst; und
der Schritt der Verknüpfung der Begrenzungsmarkierungen mit den Daten die Verknüpfung der grafisch angegebenen Begrenzungsmarkierungen mit Daten innerhalb des linearen Datenfeldes umfasst.

9. Verfahren nach Anspruch 8, das des Weiteren Folgendes umfasst:
Ändern des Bereichs, indem die Begrenzungsmarkierungen neu gesetzt werden.

10. Verfahren nach Anspruch 8 oder 9, wobei der Schritt der Festlegung ein proportionales Verhältnis zwischen den Positionen der grafisch dargestellten Begrenzungsmarkierungen und dem Datenfeld erzeugt.

11. Verfahren nach Anspruch 8, 9 oder 10, wobei die Datenbank relational ist.

12. Verfahren zur Erzeugung von Daten, die eine Bereichsbedingung zur Verwendung beim Zugriff auf eine Datenbank angeben, das den Zugriff auf die Datenbank zur Entnahme eines Feldes von hierarchisch geordneten Daten aus einem Feld der Datenbank (7), die Anzeige der Daten, die Erzeugung und die Anzeige von Markierungsbildern zur Darstellung eines Bereichs innerhalb der Daten und die automatische Erzeugung von Daten umfasst, die eine Bereichsbedingung für den Zugriff auf die Datenbank auf der Grundlage des dargestellten Bereichs und der entnommenen Daten angeben; wobei das Verfahren durch die Erzeugung und die Anzeige eines linearen grafischen Bildes (9) des Datenfeldes, die Erzeugung und die Anzeige von Markierungsbildern (11, 12), die im Verhältnis zu dem linearen Bild positioniert werden, um einen Bereich innerhalb des linearen Bildes grafisch darzustellen, und die automatische Erzeugung von Daten gekennzeichnet ist, die eine Bereichsbedingung für den Zugriff auf die Datenbank auf der Grundlage des grafisch dargestellten Bereichs und der entnommenen Daten angeben.

13. Verfahren nach Anspruch 12, das des Weiteren die Ermittlung von expliziten Werten unter Verwendung des grafisch dargestellten Bereichs und der entnommenen Daten und die Anzeige der expliziten Werte (19, 21), die dem grafisch dargestellten Bereich entsprechen, umfasst.

## Revendications

1. Un système pour générer une interface entre un utilisateur et des données stockées dans une base de données, comprenant :
des moyens de description, sur un affichage graphique, de données classées hiérarchiquement, issues de la base de données ;
des moyens pour spécifier une plage dans les données ; et
des moyens pour décrire sur l'affichage graphique, la plage spécifiée, en se référant aux moyens de description des données ;
caractérisé en ce que :
lesdits moyens de description, sur une base graphique, de données classées hiérarchiquement, issues de la base de données, comprennent des moyens (9) pour décrire graphiquement de façon linéaire sur l'affichage graphique (4) un champ de données (7) venant de la base de données ;
lesdits moyens pour spécifier une plage dans les données comprennent des moyens pour spécifier une plage dans le champ de données ; et
lesdits moyens pour décrire sur l'affichage graphique la plage spécifiée, en se référant aux moyens pour décrire les données, comprennent des moyens (11, 12) pour décrire graphiquement, sur l'affichage graphique, la plage spécifiée en se référant aux moyens pour décrire graphiquement le champ des données.

2. Le système selon la revendication 1, comprenant en outre des moyens graphiques (14, 16, 17, 18) pour faire varier sélectivement la plage spécifiée.

3. Le système selon la revendication 2, dans lequel les moyens pour faire varier sélectivement la plage spécifiée comprennent des moyens pour incrémenter et pour décrémenter.

4. Le système selon la revendication 1, 2 ou 3, dans lequel les moyens pour spécifier comprennent des moyens d'entrée alphanumérique (19, 21) pour spécifier la plage.

5. Le système selon l'une quelconque des revendications précédentes, dans lequel le champ des données est un champ venant d'une base de données relationnelle.

6. Le système selon l'une des revendications précédentes, dans lequel les moyens pour décrire graphiquement un champ de données est une barre de règle (9) et les moyens pour décrire graphiquement la plage spécifiée comprennent des marqueurs de frontière (11, 12) se référant à la barre de règle.

7. Le système selon la revendication 6, dans lequel les moyens pour spécifier la plage sélectionnent la valeur la plus proche lorsqu'il y a une variation de la réponse à une translation du marqueur de frontière.

8. Un procédé d'interfaçage d'un utilisateur humain pour des données dans une base de données, comprenant les étapes consistant à :
décrire sur un poste de travail des données classées hiérarchiquement pour l'affichage, présentes dans la base données ;
spécifier à l'aide de marqueurs de frontière une plage dans les données ; et
lier les marqueurs de frontière aux données ;
caractérisé en ce que :
ladite étape de description, sur un affichage de poste de travail, de données classées hiérarchiquement, présentes dans la base de données, comprend la description graphique, sur un affichage de poste de travail (4), d'un champ linéaire de données (7) présent dans la base de données ;
lesdites étapes de spécification, par des marqueurs de frontière, d'une plage dans les données, comprend la spécification à l'aide de marqueurs de frontière (11, 12), définis graphiquement, d'une plage dans le champ linéaire des données ;
ladite étape de liaison des marqueurs de frontière aux données comprend la liaison des marqueurs de frontière, définis graphiquement, envers les données se trouvant à l'intérieur du champ linéaire de données.

9. Le procédé selon la revendication 8, comprenant en outre :
la modification de la plage en repositionnant les marqueurs de frontière.

10. Le procédé selon la revendication 8 ou 9, dans lequel l'étape de spécification crée une relation proportionnelle entre les emplacements des marqueurs de frontière décrits graphiquement et le champ des données (11).

11. Le procédé selon la revendication 8, 9 ou 10, dans lequel la base de données est relationnelle.

12. Un procédé de génération de données définissant une condition de plage, pour l'utilisation lors d'accès aux bases de données, comprenant l'accès à la base de données pour extraire un champ de données classées graphiquement dans un champ de la base de données (7), l'affichage desdites données, la génération et l'affichage d'images de marqueurs pour représenter une plage dans lesdites données, et la génération automatique de données, définissant une condition de plage, pour accéder à la base de données, en se basant sur la plage représentée et sur les données extraites ; caractérisé par la génération et l'affichage d'une image graphique linéaire (9) dudit champ de données ; la génération et l'affichage d'images de marqueurs (11, 12) positionnés en relation avec ladite image linéaire pour représenter graphiquement une plage dans l'image linéaire, et la génération automatique de données définissant une condition de plage pour l'accès à la base de données en se basant sur la plage représentée graphiquement et sur les données extraites.

13. Un procédé selon la revendication 12, comprenant en outre la détermination de valeurs explicites, en utilisant la plage représentée graphiquement et les données extraites, et l'affichage des valeurs explicites (19, 21), correspondant à la plage représentée graphiquement.
